(19) **Europäisches Patentamt**

**European Patent Office**

**Office européen des brevets**

(11) **EP 1 034 872 B1**

(12) **EUROPEAN PATENT SPECIFICATION**

(45) Date of publication and mention
of the grant of the patent:
**19.02.2003 Bulletin 2003/08**

(51) Int Cl.7: **B23H 7/02**, B23H 7/10

(21) Application number: **99104970.1**

(22) Date of filing: **12.03.1999**

(54) **Reciprocated wire feeding electric spark cutter**

Funkenerosionsmaschine mit hin- und hergehender Drahtelektrode

Machine pour usinage par électroérosion avec un fil ayant un mouvement de va-et-vient

(84) Designated Contracting States:
**DE ES IT**

(43) Date of publication of application:
**13.09.2000 Bulletin 2000/37**

(73) Proprietor: **Agie Charmilles Industrial
Electronics Limited
Beijing 101300 (CN)**

(72) Inventor: **Gao,Yingli, c/o Agie Charmilles
Industrial
Beijing 101300 (CN)**

(74) Representative:
**Reinhard - Skuhra - Weise & Partner
Postfach 44 01 51
80750 München (DE)**

(56) References cited:
**GB-A- 1 132 076**          **US-A- 4 379 042**

- **PATENT ABSTRACTS OF JAPAN vol. 010, no.
  070 (M-462), 19 March 1986 (1986-03-19) -& JP 60
  213427 A (HITACHI SEIKO KK), 25 October 1985
  (1985-10-25)**

## Description

This invention relates to an electric discharge process, i.e. metal is removed by a series of rapid and repeated electric discharge between the electrode and the work piece submerged inside the liquid media, particularly to a reciprocated wire feeding electric spark cutter.

Electric spark cutters that are widely used today are divided into two types, i.e. one direction wire feeding cutter, which is generally used in high precision linear cutting processes due to its high precision processing; and reciprocated wire feeding cutter, which utilizes molybdenum filament, which can be repeatedly used, as the electrode, and which can operated at a high speed of 3-10 m/s.

This invention is related to the reciprocated wire feeding electric spark cutter as mentioned above, which is mainly comprised of the wire feeding system that controls the movement of the electrode, the work table driving system that controls the movement of the work piece, and the filter system of the work liquid.

This kind of linear cutter contains a body, on which an upward vertical column is mounted. A lifting column driven by the power system is mounted at the projecting end that extends horizontally from the vertical column. The bottom of the lifting column is connected to the guide wheels. The wire electrode is wounded out from the top and bottom of the wire magazine mounted on the vertical column of the body. The wire electrode is wounded around all guide wheels so as to form a circulated wire feeding system.

While this kind of wire feeding device is struck by the following drawbacks: since the wire electrode wounded out from the wire magazine is not symmetrical, the degree of tension of the wire electrode may be different due to non-uniformity of tension stress born by the top and bottom wires, thus leading to the quality of cutting, such as surface precision, roughness, and rate of cutting of the work piece. The wire electrode may be broken or slashed, when changing work pieces of different thickness or making cutting operation of different slopes due to the absence of the tension device in some lathes.

While most electric spark cutters utilizes such a driving system of the work table that the motor controls the feeding speed of the work table via a speed reducing mechanical transmission system which drives the lead screw. The mechanical transmission system in such a system inevitably has transmission errors due to impact by such problems as processing precision and connection precision, and therefore is characterized by low movement precision and structure complexity. There is another kind of work table driving system, which utilizes a kind of stepping motor as the driving power. Since the step angle of such a stepping motor is relatively great, a power device must be employed in order to subdivide the step angle of the stepping motor before it is linked to the lead screw, and allow the work table to reach the expected feeding speed. The driving system of the work table of such a structure is likewise bothered by the same problems as mentioned above, because it is not directly linked to the lead screw.

A work liquid filter system utilizes a layer of nonwoven fabric installed above the water tank. The work liquid penetrates through the nonwoven fabric into the water tank from the work table, and is recycled. Extremely tiny debris produced during electric discharge processing is very easy to flow into the water tank via the layer of nonwoven fabric with the work liquid, and is recycled in a mixture with the work liquid. In ordinary circumstances, the work liquid will become very dirty after the cutter is being used for some time. It is a usual method to replace some of the work liquid in the water tank and add some clean work liquid for further operation. While at this moment, there is still large amount of cutting debris being mixed with the work liquid. Such a work liquid mixed with cutting debris will not only contaminate the work table and the operator, but also greatly reduce the precision of electric discharge process, because it affects the fissure of the electric discharge.

Due to the impact of above mentioned factors, existing reciprocated wire feeding electric spark cutters are characterized by low cutting precision as well as low surface roughness. Its cutting precision is lower than 0.02mm. Therefore, the range of application of such type of linear cutters is greatly narrowed.

The object of the present invention is to provide a reciprocated wire feeding electric spark cutter, which can realize a relatively higher linear cutting precision at a lower manufacturing cost without the shortcoming above mentioned

The object of this invention is realized as such: A reciprocated wire feeding electric spark cutter, mainly composed of a wire feeding system which controls the movement of the wire electrode, an operating table drive system which controls the movement of the work piece, as well as a work liquid filtering system; A column is designed up and perpendicular to the cutter, while a main axle lifting mechanism is mounted on the column; a wire magazine which stores the wire electrode is equipped with the wire feeding system, with the wire electrode, shaped in a closed spin state, wounded in the magazine and fed out from two axial ends; it is characterized by two sets of guiding wheels positioned symmetrically up and down in the wire feeding system which controls the movement of the wire electrode, as well as the symmetrically positioned tension mechanism, with at least a master guiding wheel and a tension wheel to be designed in each set of guiding wheels, while the wire electrode fed by the wire magazine is wounded the two sets of guiding wheels; a mechanical subdivision stepping motor is utilized as the driving motor of the work table, with the work table driven by the output of the motor which is directly connected with the lead screw; at least two levels of filtering devices are equipped within the filter water tank mentioned.

Since the wire feeding device in this invention utilizes a guide wheel mechanism of top and bottom symmetry, and the tension wheels of top and bottom symmetry are fixed in the same moving plate, the moving plate can, as forced by the gravity hammer, allow the top and bottom tension wheels that are fixed above it to move simultaneously, thus forming a simultaneous tensioning mechanism, which can execute tension forces of the same magnitude, thus forcing the working wire electrode between the top and bottom guide wheels to be tensioned simultaneously at the same tension force. The friction force that is initiated between the top and bottom surface of the work piece are the same. This way, the processing precision of the electric discharge operation is enhanced; the weight of the gravity hammer is adjustable, so that the gravity hammer can satisfy different tension forces and requirements of wire electrodes of different diameters; The wire electrode is pulled backward for some distance due to mounting of top and bottom auxiliary wheels. Therefore, when a piece of string pulls four segments of wire electrodes via the two tension wheels, the pulling distance of the string is ¼ of the total distance that the wire electrode is extended or withdrawn. It is therefore possible for the tension device to store more wire electrode. The wire electrode that is stored is used to accommodate breakage or loosing with a relatively great length adjustment when it is necessary to change the thickness or slope of the work piece being cut

In one embodiment of the invention, the feeding system of the work table utilizes a linkage mechanism where the subdivision stepping motor and the lead screw are directly connected, thus achieving an extremely precise impulse equivalence with the help of optimum cooperation between the subdivision stepping motor and the ball screw. Thus, the structure of the mentioned work table system is greatly simplified, its transmission error is dramatically reduced, its transmission precision is greatly enhanced.

Another feature of this invention is that it is able to provide clean work liquid for electric discharge process via two or more levels of filtering, so as to ensure stability of the electric discharge fissure, and enhance the precision of linear cutting.

It has been proved by a large amount of tests that this invention is able to offer a processing precision twice as high as that offered by other existing linear cutters.

**Brief Description of the Drawings:**

Figure 1 is a structure illustration of this invention
Figure 2 is a structure illustration of the work table drive system of this invention
Figure 3 is a structure illustration of the wire feed system of this invention
Figure 3A is a structure illustration of the wire feed system of this invention in another embodiment
Figure 4 is a structure illustration of the wire electrode tension mechanism of the wire feed system of this invention
Figure 5 is a structure illustration of the filter system of this invention

This invention will now be described in detail pursuant to the embodiments and their illustrations.

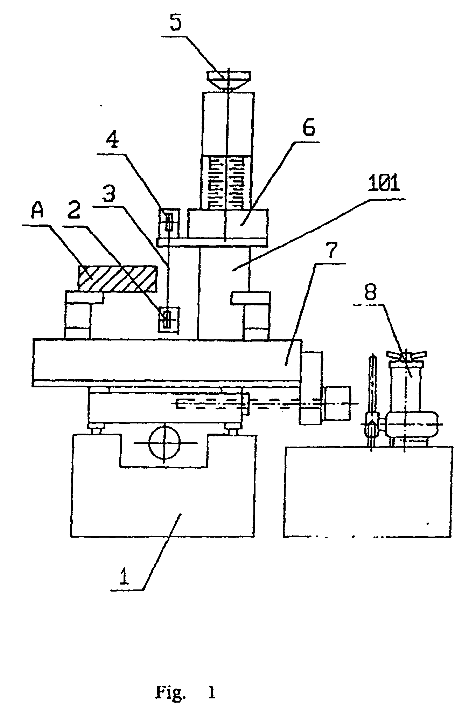

Referring specifically to Figure 1, this invention is mainly a kind of reciprocated wire feeding electric spark cutter. As shown in the figure, it is mainly comprised of a wire feeding system which controls the movement of the wire electrode, an operating table drive system 7 which controls the movement of the work piece, as well as a work liquid filtering system 8; A column 101 is designed up and perpendicular to the cutter 1, while a main axle lifting mechanism 5 is mounted at the projecting beam of the column 101. The wire electrode 3 that goes through the top master guide wheel 41 and bottom master guide wheel 21 performs cutting operation on the work piece A on the work table 7.

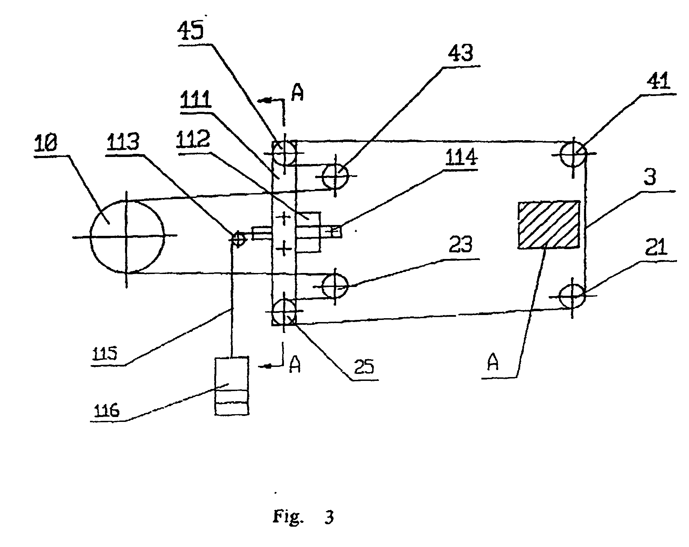

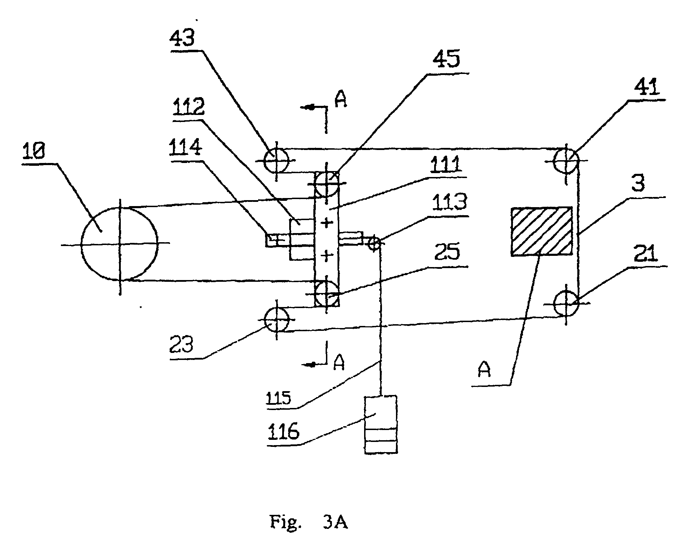

The structure illustration of the wire feed system of this invention is shown in Figure 3, where a wire magazine 10 that stores the wire electrode is designed inside the wire feed system. The wire electrode 3 is wounded around the magazine 10 in a spiral state. The magazine 10 can, as driven by the power system, move in either clockwise or counter clockwise direction in addition to the axial movement. The wire electrode 3, shaped in closed spinal state, winds out from both ends of the magazine 10. As the magazine 10 is moving, wire electrode 3 is released from one end of the magazine, goes through guide wheel set 4 and the bottom guide wheel set 2, and return to the magazine by winding up at the other end, thus realizing reciprocated wire feeding.

This invention is characterized by that two sets of guide wheels that are symmetrically positioned between top and bottom are utilized in the wire feed system which controls the movement of the wire electrode, i.e. a completely symmetrical tension system is formed by the top master guide wheel set 4 and the bottom master guide wheel set 2, with each set being comprised of at least a master guide wheel and a tension wheel. In this embodiment, the top master guide wheel set 4 is mainly formed by the top master guide wheel 41 and the top tension wheel 45; while bottom master guide wheel 21 and bottom tension wheel 25 are completely symmetrically positioned on the bottom master guide wheel set 2 and top master guide wheel set; The wire electrode 3 that comes out of the magazine 10 winds around those two guide wheel sets; where the top master guide wheel 41 is connected to lifting device 5, which drives the top master guide wheel 41 in the wire feed system to move up or down for adjustment, so as to meet processing requirements of different thickness work pieces.

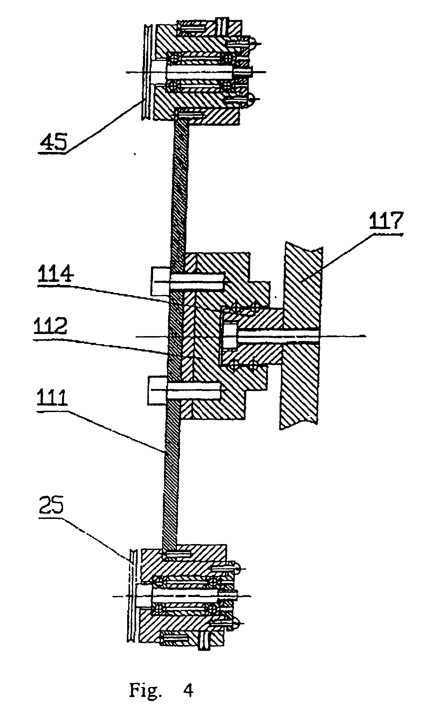

Referring specifically to Figure 4, the above mentioned tension wheels 45 and 25 are mounted inside the column 101 of the cutter, and are linked to a tension device 11. The tension device 11 contains the moving plate 111, top tension wheel 45, bottom tension wheel 25 which is fixed at both ends of the moving plate 111. A guide rail sliding block 112 is fixed at the symmetrical center between the tension wheels 45 and 25 above the moving plate. The guide rail sliding block 112 is fixed on the straight rail 114 on the support plate 117 inside the column 101 of the cutter. A gravity hammer 116 is linked to the opposite side of the sliding block via a string wounded around the fixed pulley 113. The sliding plate 111 can, therefore, make horizontal movements driven by a gravity hammer 116 and the fixed pulley 113. The gravity hammer 116 is comprised of detachable weights. The weight of the gravity hammer can be easily adjusted by changing the number of weights, thus adjusting the tension force of the wire electrode 3.

In this embodiment, top master guide wheel set 4 and bottom guide wheel set 2, which are vertically symmetrical, are symmetrized by top auxiliary wheel 43 and bottom auxiliary wheel 23, respectively. In this embodiment, the top auxiliary wheel 43 and bottom auxiliary wheel 23 that are added are fixed on the magazine 10 between the top and bottom tension wheels. The longitudinal axis of the tension wheels 45 and 25 must be horizontally apart for a certain distance from that of the auxiliary wheels 43 and 23. The wire electrode 3 must wind around the auxiliary wheels 43 and 23, which are farther away from the magazine, first, then wind around the tension wheel.

As shown in Fig. 3A, the said auxiliary wheels 43 and 23 may be mounted between the tension wheel and the master guide wheel. In this embodiment, a horizontal distance should be kept between the longitudinal axes of the tension wheels 45 and 25 and that of the auxiliary wheels 43 and 23. The wire electrode should be first wounded at the tension wheel 45 and 25 that is further away from the wire magazine, and then wounded at the auxiliary wheels 43 and 23.

The assembly method of the wire feed system should be: pull the wire electrode 3 from wire feeding vent of magazine 10, wind it around the top auxiliary wheel 43 which is farther away from the magazine 10, then around the top tension wheel 45 and top master guide wheel 41, then around bottom master guide wheel 25 and bottom tension wheel 25, then around bottom auxiliary wheel 23, finally return to magazine 10, forming a circulated wire feeding route. When the magazine 10 makes positive or negative rotations as controlled, the wire electrode 3 can cut the work piece by reciprocated movements. Since the top and bottom symmetrical tension wheels are both mounted on the moving plate 111, the moving plate 111 can, as driven by the gravity hammer 116, make movements toward magazine 10 along the direction parallel to the straight rail 114, and can drive the top and bottom tension wheels 45 and 25 above it to move along the same direction, thus executing the same tension force against the wire electrode. The wire electrode 3 working between the top and bottom master guide wheels 41 and 21 is therefore tensioned by the same force. The friction forces generated by the top and bottom surfaces of the work piece are of the same magnitude, thus being helpful to enhance the precision of electric discharge operation. The gravity hammer 116, whose weight is adjustable, can be used for different tension forces and meet the requirements of wire electrodes of different diameters.

Therefore, when a piece of string pulls four segments of wire electrode 3 via the two tension wheels, the pulling distance of the string is ¼ of the total distance that the wire electrode is extended or withdrawn. It is therefore possible for the tension device to store more wire electrode. The wire electrode 3 that is stored is used to accommodate breakage or loosing with a relatively great length adjustment when it is necessary to change the thickness or slope of the work piece being cut.

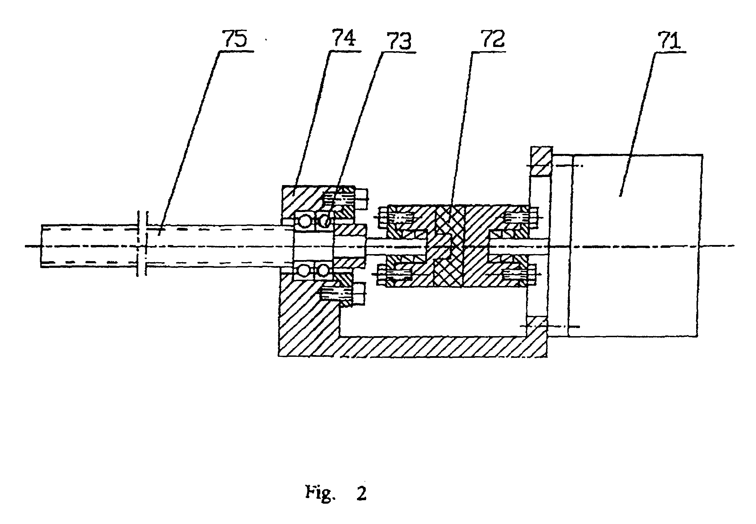

Referring to Figure 2, A mechanical subdivision stepping motor is utilized in this invention as the driving motor of the work table 7. It is characterized by the fact that the output of the motor 71 is directly connected to the lead screw 75, thus driving work table 7 to make movements. Based on the technical specifications on linear cutters, the step angle of the subdivision stepping motor 71 is compatible to the lead screw 75, where the impulse equivalence must be lower than 0.001mm according to the following formula:

$$N/360 \times M \leq 0.001\text{mm}.$$

Where:

N is the step angle of the motor
M is the pitch of the lead screw.

In this embodiment, the step angle of the mechanical subdivision stepping motor 71 is 0.09°, the pitch of the ball lead screw that works with it is 4mm, the impulse equivalence that can be realized should be: $0.09/360 \times 4 = 0.001\text{mm}$. The output of the subdivision stepping motor 71 is directly linked to the lead screw 75 via a cross coupler 72. The lead screw 75 is linked to the base 74 of the motor via lead screw 75.

In a word, the feeding system of the work table of this invention utilizes such a structure where the motor and the lead screw are directly linked to each other, thus dramatically simplified the structure of the work table system, and greatly reduced transmission errors. This invention is therefore able to offer extremely precise feed speeds and enhance precision of the electric discharge process.

In this invention, an inlet 811, which is linked to the work table, is fixed inside the water tank 8. Two or more chambers can be designed inside the inlet, with one type of filter device being mounted inside each chamber. The filter device could be nonwoven fabric, sponge, filter screen, filter paper, etc., thus forming a multiple layer filtering system that can filter the work liquid and offer a clean work liquid.

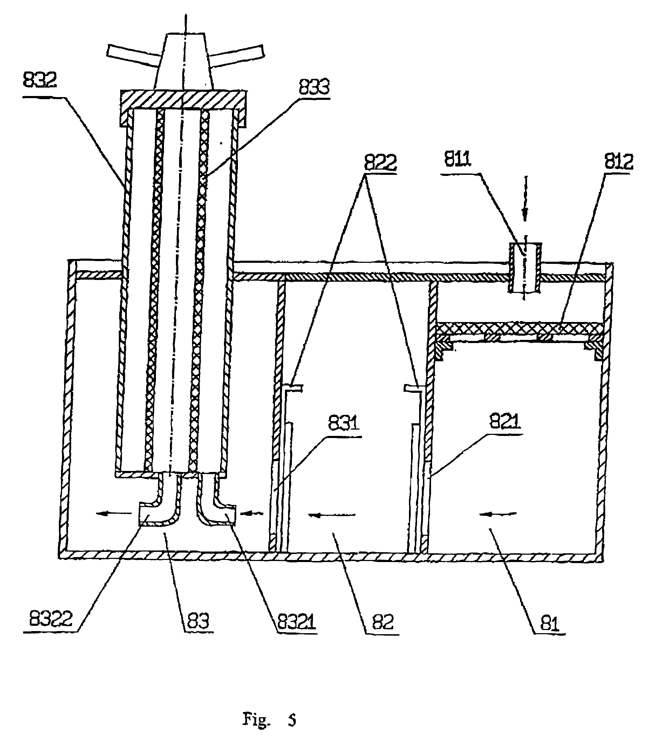

A better embodiment is shown in Figure 5, where three chambers 81, 82, and 83 are designed inside the water filter tank. A work liquid inlet 811, which is linked to the work table, is designed on top of the first chamber 81. A first level filtering device 812 formed by nonwoven fabric or sponge is fixed on the top of the chamber 81. The work liquid goes through the first filter device 812 for first filtering, then enters the first chamber 81. A vent 821 that links to the first chamber 81 and the third chamber 83 is mounted on the side wall at the bottom of the first chamber 82. The second level filtering device 822, formed by filter screen, is designed at the vent 822. The work liquid first goes through the second level of filtering device 822, enters the second chamber 82, goes through the second filtering device 822, then enters the third chamber 83 for secondary filtering. A filtering cylinder 832 is fixed inside the third chamber 83. A hollow cylinder is designed inside the filtering cylinder 832. A hollow cylinder filter core 833 made of nonwoven fabric or sponge, filter screen or filter paper is designed inside the filter cylinder 832. The inlet of the filter cylinder 832 can be linked to a ring type chamber formed by the exterior wall, while the outlet is fixed inside a hollow cylinder type filter core formed by nonwoven fabric or sponge, filter screen or filter paper.

The clean work liquid can be provided for electric discharge operation with the help of the two or more levels of filtering implemented in this invention, thus ensuring stability of the discharge fissure and enhancing precision of the linear cutting operation.

Three significant improvements as mentioned above have been made in this invention, which realized greatly enhanced processing precision of the cutter. It has been verified by large amount of tests that the electric spark cutter specified in this invention can assure enhanced production precision.

The above mentioned embodiments are used for description of this invention only, and should not be deemed as limitation of this invention.

## Claims

1. A reciprocated wire feeding electric spark cutter (1), mainly composed of a wire feeding system which controls the movement of the wire electrode (3), an operating table drive system (7) which controls the movement of the work piece (A), as well as a work liquid filtering system (8); A column (101) is designed up and perpendicular to the cutter (1), while a main axle lifting mechanism (8) is mounted on the column (101); a wire magazine (10) which stores the wire electrode (3) is equipped with the wire feeding system, with the wire electrode (3), shaped in a closed spin state, wounded in the magazine (10) and fed out from two axial ends; it is **characterized by** two sets of guiding wheels (2, 4) positioned symmetrically up and down in the wire feeding system which controls the movement of the wire electrode (3), as well as the symmetrically positioned tension mechanism, with at least a master guiding wheel (21, 41) and a tension wheel (25, 49) to be designed in each set of guiding wheels (2, 4), while the wire electrode (3) fed by the wire magazine (10) is wounded the two sets of guiding wheels (2, 4); a mechanical subdivision stepping motor (71) is utilized as the driving motor of the work table (7), with the work table (7) driven by the output of the motor (71) which is directly connected with the lead screw (75); at least two levels of filtering devices (812, 822) are equipped within the filter water tank (8) mentioned.

2. A reciprocated wire feeding electric spark cutter as claimed in claim 1, wherein a mechanical subdivision stepping motor (71) mounted on the work table (7) as the drive motor, whose output is directly connected with the lead screw (75) via the coupler (72), and whose step angle is compatible with that of the lead screw (75), and whose impulse equivalence shall not be greater than 0.001 mm, and which shall satisfy the following condition:

$$N/360 \times M \leq 0.001 \text{ mm.}$$

Where:

N is the step angle of the motor
M is the pitch of the lead screw
and where:

the optimum step angle N of the mechanical stepping motor should be 0.09°, the optimum compatible pitch M of the lead screw should be 4mm.

3. A reciprocated wire feeding electric spark cutter as claimed in claim 1, wherein direct connection between the up and down master guiding wheels (21, 41) symmetrically positioned in the wire feeding system mentioned above and the main lifting device (5), with the tension wheel (25, 45), which is connected with a tensioning device, being installed inside the vertical column (101) of the cutter (1).

4. A reciprocated wire feeding electric spark cutter as claimed in claim 1, wherein a moving plate (111) mounted inside the tensioning device mentioned above, the above mentioned tension wheels (25, 49) fixed at the up and down ends of the moving plate (111), while the moving plate (111) can make horizontal movements driven by the gravity hammer (116), whose weight is adjustable.

5. A reciprocated wire feeding electric spark cutter as claimed in claim 4, wherein a sliding block (112) which can move on the moving plate (111) along the guide rail (114) in the symmetrical center of the two tension wheels (25, 45), and which can make horizontal movements along the straight rails (114) on the support plate (117) inside the cutter's vertical columns (101), and by the above mentioned gravity hammer (116) which can link at the side opposite to the sliding block (112) via a piece of string (115).

6. A reciprocated wire feeding electric spark cutter as claimed in claim 1 or 4, wherein the auxiliary wheels (23, 43) can be added, respectively, to the two sets of symmetrical guide wheels (2, 4).

7. A reciprocated wire feeding electric spark cutter as claimed in claim 6 wherein the auxiliary wheels (23, 43) can be added, respectively, to the two sets of symmetrical guide wheels (2, 4) between the wire magazine (10) and the tension wheel (25, 45), where a horizontal distance should be kept between the longitudinal axes of the tension wheel (25, 45) and the auxiliary wheel (23, 43), and where the electrode wire (3) should first be wounded at the auxiliary wheel (23, 43) that is further away from the wire magazine (10).

8. A reciprocated wire feeding electric spark cutter as claimed in claim 6, wherein the auxiliary wheels (23, 43) can be added, respectively, to the two sets of symmetrical guide wheels (2, 4) between the master drive wheel (21, 41) and the tension wheel (25, 45), where a horizontal distance should be kept between the longitudinal axes of the tension wheel (25, 45) and the auxiliary wheel (23, 43), and where the electrode wire (3) should first be wounded at the tension wheel (25, 45) that is further away from the wire magazine (10).

9. A reciprocated wire feeding electric spark cutter as claimed in claim 1, wherein an inlet (811), which is linked with the surface of the work table (7), mounted in the filter water tank (8), which can contain two or more chambers (81, 82, 83), with a kind of filtering device (812, 822) installed inside each chamber (81, 82, 83).

10. A reciprocated wire feeding electric spark cutter as claimed in claim 1 or 9, wherein the filtering device (812, 822) equipped in the above mentioned filter water tank (8) can be nonwoven fabric, sponge, filter screen, or filter paper.

11. A reciprocated wire feeding electric spark cutter as claimed in claim 1 or 9, wherein the said chambers (81, 82, 83) in the above mentioned filter water tank (8) can be connected each other with the bottom.

12. A reciprocated wire feeding electric spark cutter as claimed in claim 10, wherein the said nonwoven fabric, sponge, filter screen or filter paper can be installed inside one filter cylinder (832), thus forming a hollow column type filter core (833); and the inlet of the filter cylinder (832) is connected to the ring type chamber formed by the external cylinder wall; and a hollow column type filter core (833) comprised of nonwoven fabric, sponge, filter screen, or filter paper is provided with the outlet.

13. A reciprocated wire feeding electric spark cutter as claimed in claim 1 or 10, wherein the said filter housing was divided into three chambers and provided in turn with three levels of filter in the form of the filter cylinder composed of nonwoven fabric, sponge, filter screen or filter paper.

**Patentansprüche**

1. Sich hin und her bewegende Schweißdraht zuführende elektrische Funkenschneidvorrichtung (1), im wesentlichen bestehend aus einem Schweißdrahtzuführsystem, welches die Bewegung der Schweißdrahtelektrode (3) steuert; einem Arbeitstischantriebssystem (7), welches die Bewegung des Werkstücks (A) steuert, sowie aus einem Bearbeitungsflüssigkeitsfiltersystem (8); einer Säule (101), welche nach oben und rechtwinklig zu der Schneidvorrichtung (1) gebildet ist, während ein Hauptachsen-Hebemechanismus (5) auf der Säule (101) angebracht ist; einem Schweißdrahtmagazin (10), welches die Schweißdrahtelektroden (3) lagert, ausgestattet mit dem Schweißdrahtzuführsystem, wobei die Schweißdrahtelektrode (3), welche in einem geschlossenen aufgespulten Zustand gebildet ist, in dem Magazin (10) aufgewickelt ist und von zwei axialen Enden zugeführt wird, **gekennzeichnet durch** zwei Sätze von Führungsrädern (2, 4), welche symmetrisch oberhalb und unterhalb des Schweißdrahtzuführsystems angeordnet sind, welches die Bewegung der Schweißdrahtelektrode (3) steuert, sowie dem symmetrisch angeordneten Spannmechanismus mit zumindest einem Hauptführungsrad (21, 41) und einem Spannrad (25, 45), welche in jedem Satz von Führungsrädern (2, 4) vorzusehen sind, während die Schweißdrahtelektrode (3), zugeführt **durch** das Schweißdrahtmagazin (10) um die zwei Sätze von Führungsrädern (2, 4) gewickelt ist; einen mechanischen Untergruppenschrittmotor (71), welcher als Antriebsmotor des Werktisches (7) eingesetzt wird, wobei der Werktisch (7) **durch** die Ausgabe des Motors (71) angetrieben wird, welcher direkt mit der Führungsschraube (75) verbunden ist; und zumindest zwei Ebenen von Filtereinrichtungen (812, 822), welche innerhalb des Wassertanks (88) vorgesehen sind.

2. Sich hin und her bewegende Schweißdraht zuführende elektrische Funkenschneidvorrichtung nach Anspruch 1, wobei ein mechanischer Untergruppenpenschrittmotor (71) auf dem Werktisch (7) als Antriebsmotor angebracht ist, dessen Ausgang direkt mit der Führungsschraube (75) über den Koppler (72) verbunden ist, und dessen Schrittwinkel kompatibel mit dem der Führungsschraube (75) ist, und dessen Impulsäquivalenz nicht größer als 0,001 mm ist, und welches die folgende Bedingung erfüllen soll:

$$N/360 \times M \leq 0,001 \text{ mm}$$

wobei
   N der Schrittwinkel des Motors ist,
   M die Steigung der Führungsschraube ist,
und wobei
   der optimale Schrittwinkel N des mechanischen Schrittmotors 0,09° sein soll, und die optimale kompatible Steigung M der Führungsschraube 4 mm sein soll.

3. Sich hin und her bewegende Schweißdraht zuführende elektrische Funkenschneidvorrichtung nach Anspruch 1, wobei eine direkte Verbindung zwischen den oberen und unteren Hauptführungsrädern (21, 41) vorgesehen ist, welche symmetrisch in dem Schweißdrahtzuführungssystem angeordnet ist, und wobei die Haupthubeinrichtung (5) mit dem Spannrad (25, 45), welches mit einer Spanneinrichtung verbunden ist, innerhalb der vertikalen Säule (101) der Schneidvorrichtung (1) angebracht ist.

4. Sich hin und her bewegende Schweißdraht zuführende elektrische Funkenschneidvorrichtung nach Anspruch 1, wobei eine sich bewegende Platte (111) innerhalb der Spanneinrichtung befestigt ist, und das Spannrad (25, 45) an dem oberen und unteren Ende der sich bewegenden Platte (111) befestigt ist, während die sich bewegende Platte (111) horizontale Bewegungen, angetrieben durch den Schwerkrafthammer (116), ausführen kann, dessen Gewicht einstellbar ist.

5. Sich hin und her bewegende Schweißdraht zuführende elektrische Funkenschneidvorrichtung nach Anspruch 4, wobei ein gleitender Block (112) vorgesehen ist, welcher sich auf der sich bewegenden Platte (111) entlang der Führungsschiene (114) in dem symmetrischen Zentrum der zwei Spannräder (25, 45) bewegen kann, und welcher horizontale Bewegungen entlang der geraden Schienen (114) auf der Stützplatte (117) innerhalb der vertikalen Säulen (101) der Schneidvorrichtung und durch den Schwerkrafthammer (116) ausführen kann, welcher an der Seite gegenüberliegend des gleitenden Blocks (112) über einen Draht (115) verbunden sein kann.

6. Sich hin und her bewegende Schweißdraht zuführende elektrische Funkenschneidvorrichtung nach Anspruch 1 oder 4,
wobei die Hilfsräder (23, 43) jeweils zu den zwei Sätzen der symmetrischen Führungsräder (2, 4) hinzugefügt werden können.

7. Sich hin und her bewegende Schweißdraht zuführende elektrische Funkenschneidvorrichtung nach Anspruch 6, wobei die Hilfsräder (23, 43) jeweils zu den zwei Sätzen symmetrischer Führungsräder (2, 4) zwischen dem Schweißdrahtmagazin (10) und dem Spannrad (25, 45) hinzugefügt werden können, wobei ein horizontaler Abstand zwischen der Längsachse des Spannrades (25, 45) und des Hilfsrades (23, 43) eingehalten werden sollte, und wobei der Elektrodenschweißdraht (3) zuerst um das Hilfsrad (23, 43) gewickelt werden sollte, welches weiter weg von dem Schweißdrahtmagazin (10) ist.

8. Sich hin und her bewegende Schweißdraht zuführende elektrische Funkenschneidvorrichtung nach Anspruch 6, wobei die Hilfsräder (23, 43) jeweils zu den zwei Sätzen symmetrischer Führungsräder (2, 4) zwischen das Haupttriebrad (21, 41) und das Spannrad (25, 45) hinzugefügt werden können, wobei ein horizontaler Abstand zwischen der Längsachse des Spannrades (25, 45) und des Hilfsrades (23, 43) eingehalten werden sollte, und wobei der Elektrodenschweißdraht (3) zuerst um das Spannrad (25, 45) gewickelt werden sollte, welches weiter weg von dem Schweißdrahtmagazin (10) ist.

9. Sich hin und her bewegende Schweißdraht zuführende elektrische Funkenschneidvorrichtung nach Anspruch 1, wobei ein Einlaß (811), welcher mit der Oberfläche des Werktisches (7) verbunden ist, in dem Filterwassertank (8) befestigt ist, welcher zwei oder mehr Kammern (81, 82, 83) mit einer Filterungseinrichtung (812, 822) beinhalten kann, welche innerhalb jeder Kammer (81, 82, 83) vorgesehen ist.

10. Sich hin und her bewegende Schweißdraht zuführende elektrische Funkenschneidvorrichtung nach Anspruch 1 oder 9, wobei die Filterungseinrichtung (812, 822), welche in dem Wassertank (8) vorgesehen ist, nicht verwobene Fasern, ein Schwamm, eine Filterscheibe bzw. ein Spaltfilter oder ein Filterpapier sein kann.

**11.** Sich hin und her bewegende Schweißdraht zuführende elektrische Funkenschneidvorrichtung nach Anspruch 1 oder 9, wobei die Kammern (81, 82, 83) in dem Filterwassertank (8) miteinander mit dem Boden verbunden sein können.

**12.** Sich hin und her bewegende Schweißdraht zuführende elektrische Funkenschneidvorrichtung nach Anspruch 10, wobei die nicht verwobenen Fasern, der Schwamm, die Filterscheibe oder das Filterpapier innerhalb eines Filterzylinders (832) vorgesehen sein kann, wodurch ein Hohlsäulenfilterkern (833) gebildet wird, und der Einlaß des Filterzylinders (832) mit der ringförmigen Kammer, welche durch die externe Zylinderwand gebildet wird, verbunden ist, und ein Hohlsäulenfilterkern (833), welcher nicht verwobene Fasern, einen Schwamm, eine Filterscheibe oder Filterpapier aufweist, mit dem Auslaß vorgesehen ist.

**13.** Sich hin und her bewegende Schweißdraht zuführende elektrische Funkenschneidvorrichtung nach Anspruch 1 oder 10, wobei das Filtergehäuse in drei Kammern eingeteilt ist und mit drei Filterebenen in der Form des Filterzylinders versehen ist, welcher aus nicht verwobenen Fasern, einem Schwamm, einer Filterscheibe oder einem Filterpapier zusammengesetzt ist.

**Revendications**

**1.** Machine (1) pour usinage par électroérosion avec un fil ayant un mouvement de va- et- vient, composée principalement d'un système d'alimentation de fil qui commande le déplacement du fil d'électrode (3), d'un système d'entraînement (7) d'une table opérationnelle qui commande le déplacement de la pièce de travail (4), ainsi que d'un système de filtrage (8) d'un liquide de travail; une colonne (101) est disposée au-dessus et perpendiculairement à la machine (1) pendant qu'un mécanisme (8) d'élévation d'un axe principal est monté sur la colonne (101); un magasin de fil (10) qui stocke le fil électrode (3) est équipé du système d'alimentation en fil avec le fil électrode (3), profilé dans un état fermé en révolution, enroulé dans le magasin (10) et alimenté depuis deux extrémités axiales, **caractérisée par** deux jeux de roues de guidage (2, 4) positionnées symétriquement en haut et en bas dans le système d'alimentation en fil qui commande le déplacement du fil électrode (3) ainsi que le mécanisme de tension positionné symétriquement, avec au moins une roue maîtresse de guidage (21, 41) et une roue de tension (25, 49) agencées dans chaque jeu de roues de guidage (2, 4), tandis que le fil électrode (3) fourni par le magasin de fil (10) est enroulé sur les deux jeux de roues de guidage (2, 4) ; un moteur pas- à- pas (71) de subdivision mécanique est utilisé comme moteur d'entraînement de la table de travail (7), la table de travail (7) étant entraînée par la sortie du moteur (71) qui est directement reliée à la vis menante (75) ; au moins deux niveaux de dispositifs de filtrage (812, 822) sont prévus dans le réservoir (8) de filtrage précité.

**2.** Machine pour usinage par électroérosion avec un fil ayant un mouvement de va - et - vient selon la revendication 1, dans laquelle est prévu un moteur pas à pas (71) de subdivision mécanique monté sur la table de travail (7) comme moteur d'entraînement, dont la sortie est directement reliée à la vis menante (75) via le coupleur (72) et dont l'angle de pas est compatible avec celui de la vis menante (75), dont l'équivalence en impulsion n'est pas supérieure à 0,001 mm et qui satisfait à la condition suivante :

$$N / 360 \times M \leq 0.001 \text{ mm.}$$

où :

N est l'angle de pas du moteur
M est le pas de la vis menante
  et où :

l'angle de pas optimum N du moteur pas à pas mécanique devrait être $0.09°$, le pas compatible optimum M de la vis menante devant être de 4 mm.

**3.** Machine pour usinage par électroérosion avec un fil ayant un mouvement de va et vient selon la revendication 1 dans laquelle une liaison directe entre les roues maîtresses de guidage (21, 24) haute et basse positionnées de manière symétrique dans le système précité d'alimentation en fil et dans le dispositif d'élévation principal (8), avec la roue de tension (25, 45) qui est reliée à un dispositif de mise sous tension, est installée à l'intérieur de la colonne verticale (101) de la machine (1).

**4.** Machine pour usinage par électroérosion avec un fil ayant un mouvement de va et vient selon la revendication 1, dans laquelle une plaque mobile (111) est montée à l'intérieur du dispositif de mise en tension précité et les roues (25, 45) de tension précitées sont fixées aux extrémités haute et basse de la plaque mobile (111), tandis que la plaque mobile (111) peut exécuter des mouvements horizontaux entraînés par le marteau de gravité (116), dont le poids est réglable.

5. Machine pour usinage par électroérosion avec un fil ayant un mouvement de va et vient selon la revendication 4, comportant un bloc coulissant (112) qui peut se déplacer sur la plaque mobile (111) le long du rail de guidage (114) au centre symétrique des deux roues de tension (25, 45), et qui peut effectuer des mouvements horizontaux le long des rails de guidage (114) sur la plaque support (117) à l'intérieur des colonnes verticales (101) de la machine, et le marteau de gravité (116) précité peut s'articuler sur le côté opposé au bloc coulissant (112) via un élément de corde (115).

6. Machine pour usinage par électroérosion avec un fil ayant un mouvement de va et vient selon la revendication 1 ou 4, dans laquelle les roues auxiliaires (23, 43) peuvent être ajoutées respectivement aux deux jeux de roues de guidage symétriques (2, 4).

7. Machine pour usinage par électroérosion avec un fil ayant un mouvement de va et vient selon la revendication 6, dans laquelle les roues auxiliaires (23, 43) peuvent être ajoutées respectivement aux deux jeux de roues de guidage symétriques (2, 4) entre le magasin de fil (10) et la roue de tension (25, 45), et une distance horizontale doit être conservée entre les axes longitudinaux de la roue de tension (25, 45) et de la roue auxiliaire (23, 43), et le fil électrode (3) doit d'abord être enroulé sur la roue auxiliaire (23, 43) qui est éloignée du magasin de fil (10).

8. Machine pour usinage par électroérosion avec un fil ayant un mouvement de va et vient selon la revendication 6, dans laquelle les roues auxiliaires (23, 43) peuvent être ajoutées respectivement aux deux jeux de roues de guidage symétriques (2, 4) entre la roue d'entraînement maîtresse (21, 41) et la roue de tension (25, 45), et une distance horizontale doit être conservée entre les axes longitudinaux de la roue de tension (25, 45) et de la roue auxiliaire (23, 43), et le fil électrode (3) doit d'abord être enroulé sur la roue auxiliaire (23, 43) qui est éloignée du magasin de fil (10).

9. Machine pour usinage par électroérosion avec un fil ayant un mouvement de va et vient selon la revendication 1, dans laquelle une ouverture d'entrée (211), qui est liée à la surface de la table de travail (7), est réalisée dans le réservoir (8) d'eau de filtrage qui peut contenir deux chambres (81, 82, 83) ou davantage, avec un dispositif de filtrage (812, 822) quelconque installé à l'intérieur de chaque chambre (81, 82, 83).

10. Machine pour usinage par électroérosion avec un fil ayant un mouvement de va et vient selon la revendication 1 ou 9, dans laquelle le dispositif de filtrage (812, 822) disposé dans le réservoir (8) d'eau de filtrage précité peut être une étoffe non tissée, une éponge, un écran filtre ou un papier filtre.

11. Machine pour usinage par électroérosion avec un fil ayant un mouvement de va et vient selon la revendication 1 ou 9, dans laquelle lesdites chambres (81, 82, 83) dans le réservoir (8) d'eau de filtrage précité peuvent être reliées l'une à l'autre par le fond.

12. Machine pour usinage par électroérosion avec un fil ayant un mouvement de va et vient selon la revendication 10, dans laquelle ladite étoffe non tissée, ladite éponge, ledit écran filtre ou ledit papier filtre peut être installé(e) à l'intérieur d'un cylindre de filtrage (832), en formant ainsi un noyau de filtrage creux du type colonne ; et l'ouverture d'entrée du cylindre filtre est reliée à la chambre du type anneau formée par la paroi extérieure du cylindre ; et un noyau de filtrage (833) creux du type colonne constitué d'une étoffe non tissée, d'une éponge, d'un écran filtre ou d'un papier filtre est prévu avec l'ouverture de sortie.

13. Machine pour usinage par électroérosion avec un fil ayant un mouvement de va et vient selon la revendication 1 ou 10, dans lequel ledit boîtier filtre est divisé en trois chambres et pourvu à son tour de trois niveaux de filtre sous la forme du cylindre filtre composé d'étoffe non tissée, d'une éponge, d'un écran filtre ou d'un papier filtre.

Fig. 1

Fig. 2

Fig. 3

Fig. 3A

45

117

114

112

111

25

Fig. 4

Fig. 5